(19)

**Europäisches Patentamt**

**European Patent Office**

**Office européen des brevets**

(11) **EP 4 439 029 A1**

(12) **EUROPEAN PATENT APPLICATION**
published in accordance with Art. 153(4) EPC

(43) Date of publication:
**02.10.2024 Bulletin 2024/40**

(21) Application number: **22897631.2**

(22) Date of filing: **14.11.2022**

(51) International Patent Classification (IPC):
**G01L 5/24** (2006.01)

(86) International application number:
**PCT/CN2022/131604**

(87) International publication number:
**WO 2023/093548 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.11.2021 CN 202111416534**

(71) Applicant: **Suzhou Phaserise Technology Co., Ltd.**
**Suzhou, Jiangsu 215000 (CN)**

(72) Inventors:
- **JIN, Yisheng**
  **Suzhou, Jiangsu 215000 (CN)**
- **YANG, Long**
  **Suzhou, Jiangsu 215000 (CN)**

- **ZHOU, Xinzong**
  **Suzhou, Jiangsu 215000 (CN)**
- **XIE, Mingming**
  **Suzhou, Jiangsu 215000 (CN)**
- **LI, Kun**
  **Suzhou, Jiangsu 215000 (CN)**
- **ZHAO, Yang**
  **Suzhou, Jiangsu 215000 (CN)**
- **ZHU, Xuxiang**
  **Suzhou, Jiangsu 215000 (CN)**
- **SHEN, Yuping**
  **Suzhou, Jiangsu 215000 (CN)**

(74) Representative: **Sach, Greg Robert**
**Valet Patent Services Limited**
**c/o Caya 83713X**
**Am Börstig 5**
**96052 Bamberg (DE)**

(54) **ULTRASONIC DUAL-WAVE HIGH-RELIABILITY MEASUREMENT METHOD AND APPARATUS FOR BOLT STRESS**

(57)    The invention discloses an ultrasonic dual-wave reliability measurement method for a bolt stress. A first ultrasonic dual-wave transducer is configured to transmit and receive an ultrasonic transverse wave or an ultrasonic longitudinal wave, a second ultrasonic dual-wave transducer is configured to receive the ultrasonic transverse wave or the ultrasonic longitudinal wave, and the transverse wave or longitudinal wave generated by the first ultrasonic dual-wave transducer is propagated in a measured bolt. If a difference between TOF for which the first ultrasonic dual-wave transducer receives the echo signal and double of TOF for which the second ultrasonic dual-wave transducer receives the echo signal in a same mode is not greater than a quarter of one transmission period T, the measured TOF satisfies verification requirements. Reliability of time-of-flight data of the ultrasonic wave can be verified, and various measurement errors can be prevented.

Dispose a first ultrasonic dual-wave transducer at one end of a measured bolt, and dispose a second ultrasonic dual-wave transducer at the other end of the measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting or receiving — S01

Propagate the transverse wave or longitudinal wave generated by the first ultrasonic dual-wave transducer in the detected bolt; and measure TOF for which the first ultrasonic dual-wave transducer and the second ultrasonic dual-wave transducer receive echo signals respectively — S02

Verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements — S03

**FIG. 1**

EP 4 439 029 A1

## Description

### FIELD OF TECHNOLOGY

The invention relates to the technical field of ultrasonic dual-wave measurement of bolt stress, and in particular to an ultrasonic dual-wave high-reliability measurement method and apparatus for a bolt stress, which is particularly suitable for a scenario in which requirements for bolt stress measurement reliability and accuracy are extremely high.

### BACKGROUND

There are many public documents on principles and methods for ultrasonic dual-wave measurement of bolt stress/tension, and some industry standards have been formulated, such as ASTM1685-20, GB/T38952-2020, and the like. These documents mainly stipulate that an ultrasonic probe is placed on one of two end surfaces of a bolt, and the tensile force and stress of the bolt are calculated by using ultrasonic time of flight (TOF) of longitudinal and/or transverse waves obtained in a pulse-echo method. However, these public documents do not verify the obtained TOF data, or further explain the reliability of the data, but only ensure effectiveness of the obtained TOF by standardizing some measurement processes.

Related standards for measuring of bolt stress by ultrasonic dual-wave state that the bolt stress has a linear relationship with TOF of the ultrasonic wave. However, an initial value and a slope of a linear relationship calibrated on a tensile machine by different device manufacturers may be different. This is because of an inherent system error related to hardware and software of each device manufacturer. For example, there is an error in zero-point calibration for a device, or a wrong peak value in a gate is always mistakenly selected when the tensile machine is calibrated. Even so, different ultrasonic device manufacturers can usually use a linear relationship between a bolt tension and TOF calibrated on a tensile machine by a device of the manufacturer, and use these possibly incorrect calibration parameters to measure accurate tension values of other bolts at a same batch, no matter whether the slope and the initial value in the linear relationship during calibration are accurate values. This is in line with relevant industry standards for bolt tension measurement. However, once these incorrect calibration parameters with device system errors are used to measure a bolt in service, there is an extremely high probability that the data is inaccurate and an incorrect bolt stress value is obtained.

For some bolts with surface characters cut in relief or characters cut in intaglio, an existing ultrasonic double-wave international standard and a national standard are not provided with specific measurement procedures. In this case, if there is indeed an application requirement for on-site measurement, reliability of parameters used in ultrasonic dual-wave measurement and a calibration method become particularly important.

There are usually many types of bolts in service, and it is impossible for every type of bolts to go through a complicated tensile machine calibration process to obtain ultrasonic measurement parameters. In this way, an accurate ultrasonic measurement parameter database for the bolt tension is extremely important, but previous methods used to build these accurate ultrasonic measurement parameter databases for the bolt stress cannot ensure reliability and application accuracy. Therefore, the invention is provided.

### SUMMARY

To resolve the above technical problem, the invention is intended to provide an ultrasonic dual-wave high-reliability measurement method for a bolt stress. While ultrasonic dual-wave measurement of the bolt stress is performed, reliability of time-of-flight data of the ultrasonic wave is obtained through verification, which greatly improves the reliability of ultrasonic time-of-flight measurement, so that the bolt stress with high reliability can be obtained. In this method, a large amount of valid data can be obtained once, the calculation method is simple and efficient, various measurement errors can be prevented, and measurement accuracy is high.

Technical solutions of the invention are as follows.

An ultrasonic dual-wave reliability measurement method for a bolt stress, including the following steps:

S01: disposing a first ultrasonic dual-wave transducer at one end of a measured bolt, and disposing a second ultrasonic dual-wave transducer at the other end of the measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;

S02: propagating the transverse wave or longitudinal wave generated by the first ultrasonic dual-wave transducer in the measured bolt; and measuring TOF for which the first ultrasonic dual-wave transducer and the second ultrasonic dual-wave transducer receive echo signals respectively; and

S03: verifying measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements.

In a preferred technical solution, after step S03, the method further includes:
if the verification requirements are not satisfied, further verifying the measured data, and if the difference between the TOF for which the first ultrasonic dual-wave transducer receives the echo signal and double of the TOF for which the second ultrasonic dual-wave transducer receives the echo signal in a same mode is an integer of transmission periods T+1/4T, adjusting a peak selection gate and/or zero point of an ultrasonic waveform.

In a preferred technical solution, if the difference between the TOF for which the first ultrasonic dual-wave transducer receives the echo signal and double of the TOF for which the second ultrasonic dual-wave transducer receives the echo signal in a same mode is an odd number of transmission periods T+1/4T, adjusting a peak selection gate of an echo wave of the first ultrasonic dual-wave transducer; or if the difference is an even number of transmission periods T+1/4T, first adjusting a peak selection gate of an echo wave of the second ultrasonic dual-wave transducer until the difference is not greater than a quarter of one transmission period T.

In a preferred technical solution, after step S03, the method further includes: if the measured TOF does not satisfy verification requirements, measuring the TOF of ultrasonic waves in a plurality of propagation sound paths along a length direction of the measured bolt, and performing calibration based on a relationship between the TOF for which the first ultrasonic dual-wave transducer receives an echo signal and the TOF for which the second ultrasonic dual-wave transducer receives an echo signal in a same mode.

The invention further discloses an ultrasonic dual-wave high-reliability measurement method for a bolt stress, the method for reliability measuring of bolt stress by ultrasonic dual-wave according to any one of the above is used to verify measured data; and data that satisfies verification requirements is used to calculate the bolt stress.

The invention further discloses an ultrasonic dual-wave reliability measurement apparatus for a bolt stress, including:

a measurement module, including a first ultrasonic dual-wave transducer and a second ultrasonic dual-wave transducer arranged at both ends of a measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;
a measurement module, configured to propagate the transverse wave or longitudinal wave generated by the first ultrasonic dual-wave transducer in the measured bolt; and measure TOF for which the first ultrasonic dual-wave transducer and the second ultrasonic dual-wave transducer receive echo signals respectively; and
a verification module, configured to verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements.

In a preferred technical solution, the verification module is further configured to:
if the verification requirements are not satisfied, further verify the measured data, and if the difference between the TOF for which the first ultrasonic dual-wave transducer receives the echo signal and double of the TOF for which the second ultrasonic dual-wave transducer receives the echo signal in a same mode is an integer of transmission periods T±1/4T, adjust a peak selection gate and/or zero point of an ultrasonic waveform.

In a preferred technical solution, if the difference between the TOF for which the first ultrasonic dual-wave transducer receives the echo signal and double of the TOF for which the second ultrasonic dual-wave transducer receives the echo signal in a same mode is an odd number of transmission periods T+1/4T, adjusting a peak selection gate of an echo wave of the first ultrasonic dual-wave transducer; or if the difference is an even number of transmission periods T+1/4T, first adjusting a peak selection gate of an echo wave of the second ultrasonic dual-wave transducer until the difference is sm.

In a preferred technical solution, the verification module is further configured to: if the measured TOF does not satisfy verification requirements, measure the TOF of ultrasonic waves in a plurality of propagation sound paths along a length direction of the measured bolt, and perform calibration based on a relationship between the TOF for which the first ultrasonic dual-wave transducer receives an echo signal and the TOF for which the second ultrasonic dual-wave transducer receives an echo signal in a same mode.

Compared with the prior art, the invention has the following beneficial effects.

1. According to the invention, the obtained TOF of the ultrasonic wave can be mutually verified, which can greatly reduce a measurement error of TOF of the ultrasonic wave in an actual measurement process. If the TOF deviates greatly from a double relationship, it means that at least one of the measurement methods of pitch-catch or pulse-echo has a great error, so measurement of this set of TOF is unreliable. The information prevents a possibility of further deriving a bolt tension and stress with a large error based on a large error or incorrect TOF.

2. When the difference between double of the TOF in the method for pitch-catch and the TOF for pulse-echo is an integer of periods +/- a quarter of the period, it can be determined that the measurement of the TOF still has possible practical reliability, a wave peak in a gate is selected by mistake, and the peak selection gate of the ultrasonic waveform needs to be adjusted manually or automatically.

3. According to the invention, real-time zero-point calibration of the longitudinal wave and transverse wave can be performed on each measured bolt.

4. According to the invention, reliability of axial force measurement for special bolts such as a bolt with surface characters cut in relief or characters cut in intaglio can be verified.

5. According to the invention, because the accuracy of the TOF for the ultrasonic wave can be verified, a unique ultrasonic measurement time-of-flight standard can be set for all ultrasonic devices from different manufacturers, and then a bolt tension ultrasonic measurement parameter database that has a common standard and that does not depend on different manufacturers and different devices can be set for ultrasonic measurement of a bolt tension.

6. The invention is extremely important for establishing an ultrasonic parameter database for bolt tension and stress measurement that is independent of market devices, and is also extremely important for patrol inspection of a bolt axial force. With these databases, calibration of the tension machine of bolts can be eliminated; calibration elimination of the tension machine is extremely important for in-service inspection of bolts, which can save a lot of costs and time related to bolt calibration, so that tensile forces and stresses of some in-service bolts that cannot be disassembled for calibration can be reliably measured in situ by ultrasonic dual waves. Patrol inspection of the bolt axial force may also be a more economical and reliable method than online monitoring of bolts.

## BRIEF DESCRIPTION OF THE DRAWINGS

The invention will be further illustrated with reference to the accompanying drawings and the embodiments.

FIG. 1 is a flowchart of an ultrasonic dual-wave reliability measurement method for a bolt stress according to an embodiment;

FIG. 2 is a schematic diagram of configuration of an ultrasonic dual-wave transducer for measuring a bolt axial force according to an embodiment;

FIG. 3 is a flowchart of an ultrasonic dual-wave high-reliability measurement method for a bolt stress according to an embodiment;

FIG. 4 is a principle block diagram of an ultrasonic dual-wave reliability measurement apparatus for a bolt stress according to an embodiment;

FIG. 5 is a composite diagram of a waveform and TOF of a 10.9-grade bolt with a nominal length of 150mm obtained by simultaneously using ultrasonic dual-wave pulse-echo mode and pitch-catch mode according to an embodiment; and

FIG. 6 is a calibration curve of a bolt tension and a ratio of sound time (TOF) for a transverse wave to sound time (TOF) for a longitudinal wave obtained by measuring bolt specifications in Table 3 simultaneously using ultrasonic double-wave pulse-echo mode and pitch-catch mode according to an embodiment.

## DESCRIPTION OF THE EMBODIMENTS

To make the objectives, technical solutions, and advantages of the invention clearer, the invention is further described in detail below with reference to specific implementations and accompanying drawings. It should be understood that these descriptions are exemplary only and are not intended to limit the scope of the invention. Furthermore, in the following description, descriptions of well-known structures and technologies are omitted, to prevent unnecessarily confusing the concept of the invention.

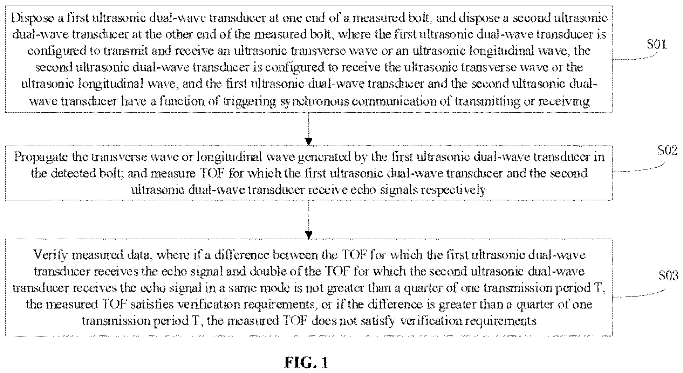

As shown in FIG. 1, an ultrasonic dual-wave reliability measurement method for a bolt stress includes the following steps.

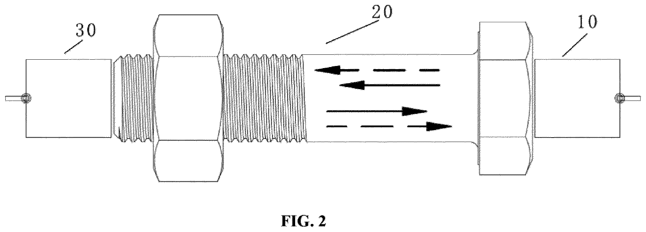

S01: As shown in FIG. 2, dispose a first ultrasonic dual-wave transducer 10 at one end of a measured bolt 20, and dispose a second ultrasonic dual-wave transducer 30 at the other end of the measured bolt 20, where the first ultrasonic dual-wave transducer 10 is configured to transmit and receive an ultrasonic transverse wave or an ultrasonic longitudinal wave, the second ultrasonic dual-wave transducer 30 is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;

S02: Propagate the transverse wave or longitudinal wave generated by the first ultrasonic dual-wave transducer 10 in the measured bolt 20; and measure TOF for which the first ultrasonic dual-wave transducer 10 and the second ultrasonic dual-wave transducer 30 receive echo signals respectively; and

S03: Verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T (that is, the TOF for which the first ultrasonic dual-wave transducer receives the echo signal is approximately double of the TOF for which the second ultrasonic dual-wave transducer receives the echo signal in a same mode), the measured TOF satisfies verification requirements, or if the difference is greater than a quarter of one transmission period T, the measured TOF does not satisfy verification requirements.

It should be noted that the stress herein may also be used for an axial force, and the stress and the axial force can be converted. The axial force is obtained by multiplying the stress by an average cross-sectional area.

The first ultrasonic dual-wave transducer 10 is a pulse-echo transducer, and the second ultrasonic dual-wave transducer 30 is a receiving transducer in pitch-catch mode. Arrangement positions of the first ultrasonic dual-wave transducer 10 and the second ultrasonic dual-wave transducer 30 are not limited. TOF for which the transducer that performs pitch-catch receives the echo signal is marked as $T_L$ and Ts, and TOF for the echo signal in pulse-echo mode is $T_{LL}$ and Tss, and then TOF for the transverse wave and TOF for the longitudinal wave satisfy the following relational expressions:

$$T_{LL}=2T_L\pm1/4T; \qquad\qquad (1)$$

$$T_{SS}=2T_S\pm1/4T; \qquad\qquad (2)$$

where a subscript L represents the longitudinal wave, a subscript S represents the transverse wave, and T is the transmission period. If one of equations (1) and (2) is not satisfied, it means that a result of the verification is that at least one set of data is unreliable.

In a preferred embodiment, after step S03, the method further includes:

if the verification requirements are not satisfied, further verifying the measured data, and if the difference between the TOF for which the first ultrasonic dual-wave transducer receives the echo signal and double of the TOF for which the second ultrasonic dual-wave transducer receives the echo signal in a same mode is an integer of transmission periods T+1/4T, adjusting a peak selection gate and/or zero point of an ultrasonic waveform.

Preferably, if the difference between the TOF for which the first ultrasonic dual-wave transducer receives the echo signal and double of the TOF for which the second ultrasonic dual-wave transducer receives the echo signal in a same mode is an odd number of transmission periods T+1/4T, adjusting a peak selection gate of an echo wave of the first ultrasonic dual-wave transducer; or if the difference is an even number of transmission periods T±1/4T, preferably adjusting a peak selection gate of an echo wave of the second ultrasonic dual-wave transducer until the difference is not greater than a quarter of one transmission period T.

When the difference between double of the TOF for which the transducer that performs pitch-catch and the TOF for the echo signal in pulse-echo mode is an integer of transmission periods +/- a quarter of one transmission period, it can be determined that the measurement in this case still has practical reliability, an integral multiple of peaks are selected by mistake, and the peak selection gate of the ultrasonic waveform needs to be adjusted manually or automatically.

For example, if the transmission period T=233nS, the following relational expressions for measurement are obtained:

$$T_{LL}=2T_L+20nS; \qquad\qquad (8)$$

$$T_{SS}=2T_S+20nS; \qquad\qquad (9)$$

It indicates that zero points of the transverse wave and longitudinal wave on a time-of-flight axis of the measured bolt need to be moved forward by 20nS.

For another example, if the following relational expressions are obtained:

$$T_{LL}=2T_L-230nS; \qquad\qquad (10)$$

$$T_{SS}=2T_S+2nS; \qquad\qquad (11)$$

It indicates that a wrong period is selected for a gate of $T_{LL}$, and the gate needs to be backward delayed by one period.

In this embodiment, real-time zero-point calibration of the longitudinal wave and transverse wave can be performed on each measured bolt. Reliability of axial force measurement for special bolts such as a bolt with surface characters cut in relief or characters cut in intaglio can be verified.

In a preferred embodiment, after step S03, the method further includes: if the verification requirements are not satisfied, measuring the TOF of ultrasonic waves in a plurality of propagation sound paths along a length direction of the measured bolt, and performing calibration based on a relationship between the TOF for which the first ultrasonic dual-wave transducer receives an echo signal and the TOF for which the second ultrasonic dual-wave transducer receives an echo signal in a same mode.

TOF for all transverse waves and longitudinal waves satisfies the following relational expressions:

$$T_{LLL}=3T_L; \qquad\qquad (3)$$

$$T_{LL}=2T_L; \qquad\qquad (4)$$

$$T_{SSSS}=4T_S; \qquad\qquad (5)$$

$$T_{SSS}=3T_S; \qquad\qquad (6)$$

$$T_{SS}=2T_S; \qquad\qquad (7)$$

A result error should not exceed one quarter of one transmission period T, where a subscript L represents the longitudinal wave, a subscript S represents the transverse wave, and the number of repeated subscripts represents a multiple of the sound path of the ultrasonic wave propagating back and forth along the length direction of the bolt. There are a total of five equations in Equations (3) to (7), which can help automatically or manually calibrate the zero point of the TOF for the transverse wave, the zero point of the TOF for the longitudinal wave, and correct wrong selection of an integral multiple of waveforms in up to three gates.

In fact, the above equations (1) to (7) can be used to calibrate the zero point of the TOF and correct a skew peak of the gate. Usually, the number of measurement equations is greater than the number of unknown quantities. Therefore, measurement results may be verified mutually in many ways, significantly improving measurement reliability.

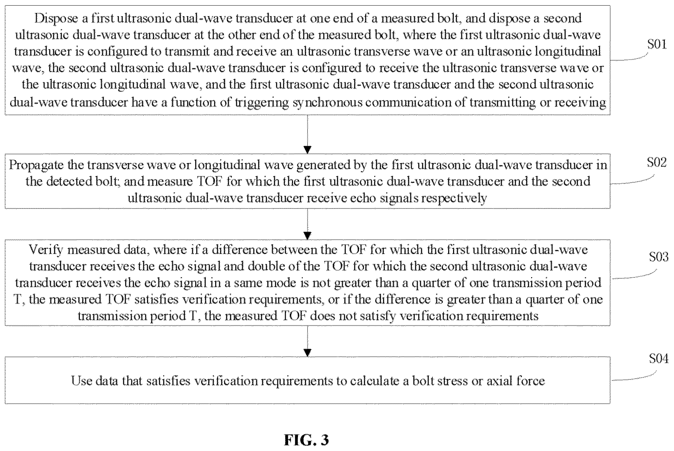

In another embodiment, FIG. 3 shows a method for high-reliability measuring of bolt stress by ultrasonic dual-wave, any one of the above method (step SO1-step S03) for reliability measuring of bolt stress by ultrasonic dual-wave is used to verify measured data. S04: Use data that satisfies verification requirements to calculate the bolt stress or an axial force.

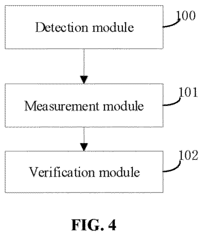

In another embodiment, as shown in FIG. 4, an ultrasonic dual-wave reliability measurement apparatus for a bolt stress includes:

a measurement module 100, including a first ultrasonic dual-wave transducer and a second ultrasonic dual-wave transducer arranged at both ends of a measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;

a measurement module 101, configured to propagate the transverse wave or longitudinal wave generated by the first ultrasonic dual-wave transducer in the measured bolt; and measure TOF for which the first ultrasonic dual-wave transducer and the second ultrasonic dual-wave transducer receive echo signals respectively; and

a verification module 102, configured to verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements.

Preferably, the verification module is further configured to:
if the verification requirements are not satisfied, further verify the measured data, and if the difference between the TOF for which the first ultrasonic dual-wave transducer receives the echo signal and double of the TOF for which the second ultrasonic dual-wave transducer receives the echo signal in a same mode is an integer of transmission periods $T \pm 1/4T$, adjust a peak selection gate and/or zero point of an ultrasonic waveform.

Preferably, if the difference between the TOF for which the first ultrasonic dual-wave transducer receives the echo signal and double of the TOF for which the second ultrasonic dual-wave transducer receives the echo signal in a same mode is an odd number of transmission periods $T+1/4T$, adjusting a peak selection gate of an echo wave of the first ultrasonic dual-wave transducer; or if the difference is an even number of transmission periods $T \pm 1/4T$, preferably adjusting a peak selection gate of an echo wave of the second ultrasonic dual-wave transducer until the difference is not greater than a quarter of one transmission period T.

Preferably, the verification module is further configured to: if the verification requirements are not satisfied, measure the TOF of ultrasonic waves in a plurality of propagation sound paths along a length direction of the measured bolt, and perform calibration based on a relationship between the TOF for which the first ultrasonic dual-wave transducer receives an echo signal and the TOF for which the second ultrasonic dual-wave transducer receives an echo signal in a same mode.

Specific embodiments are used for further explanation and verification below.

Embodiment 1

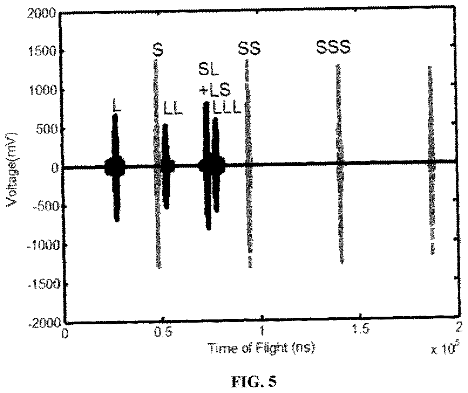

An ST100 bolt tension measurement device produced by the company is used as a platform to implement simultaneously receiving of two dual-wave probes after transmission. FIG. 5 is a diagram of a received signal. Due to a huge amount of data, only waveforms at a specific position of TOF are shown. Waves marked with L represent longitudinal waves, and waves marked with S represent transverse waves. The number of repetitions in a subscript represents a multiple of a path that an ultrasonic wave in this mode propagates throughout a bolt. A gain including the longitudinal wave is 75dB, and a waveform is represented in black. A gain of the transverse wave is 30.3dB, and a waveform is represented in gray. Relative positions of TOF of waves in various modes can be seen extremely intuitively from FIG. 5. From a mathematical point of view, for these relative positions, at least five equations may be listed, and five unknown numbers can be solved. In practical application, these relative positions may be used to calibrate a zero point of the traverse wave and a zero point of the longitudinal wave, and determine whether a waveform gate is mistakenly selected on an adjacent wave peak.

Embodiment 2

A batch of 10.9 grade 42CrMo bolts with a diameter of 33.8mm and nominal lengths of 300mm, 400mm, 500mm, and 600mm from a company are used. An ultrasonic transducer in pulse-echo mode and another ultrasonic transducer in pitch-catch mode are arranged on two ends of the bolt respectively. After being excited by a 4.3MHz ultrasonic wave, the two transducers start collecting data simultaneously. To be specific, a transmission frequency during measurement is 4.3MHz, a transmission period is 232.6ns; and TOF in different modes in each transducer is shown in Table 1.

| Sam pie speci ficati on | Mater ial | Man ufact urer | Ultras onic dual-wave period (ns) | Nomin al length (mm) | Pulse-echo dual-wave transducer | | | Pitch-catch dual-wave transducers | | | $T_S*2-T_{SS}$ (ns) | $T_L*2-T_{LL}$ (ns) |
|---|---|---|---|---|---|---|---|---|---|---|---|---|
| | | | | | TOF for a transver se wave $T_{SS}$ (ns) | TOF for a longitu dinal wave $T_{LL}$ (ns) | Ratio of TOF for a transvers e wave to TOF for a longitudi nal wave | TOF for a transve rse wave $T_S$ (ns) | TOF for a longitu dinal wave $T_L$ (ns) | Ratio of TOF for a transvers e wave to TOF for a longitudi nal wave | | |
| M33 .8 | 42Cr Mo | Any ang Long teng | 232.6 | 300 | 185100 | 101142 | 1.83010 | 92554 | 50576 | 1.83000 | 8 | 10 |
| | | | | 400 | 246765 | 134834 | 1.83014 | 123389 | 67434 | 1.82977 | 13 | 34 |
| | | | | 500 | 308551 | 168598 | 1.83010 | 154282 | 84311 | 1.82992 | 13 | 24 |
| | | | | 600 | 370207 | 202294 | 1.83004 | 185112 | 101157 | 1.82995 | 17 | 20 |

It can be learned from Table 1 that a difference between TOF for an ultrasonic wave obtained by the pulse-echo transducer and the pitch-catch transducers in a same mode is a quarter of one transmission period of 232.6ns. Therefore, it can be determined that all TOF has some measurement reliability. In fact, the determining has been verified to be correct.

Embodiment 3

A batch of 10.9 grade 42CrNiMo bolts with a diameter of 36mm and nominal lengths of 300mm, 400mm, 500mm, and 600mm purchased from another company are used. A pulse-echo ultrasonic dual-wave transducer and a pitch-catch ultrasonic dual-wave transducer are arranged on two ends of the bolt respectively. After being excited by a 4.3MHz ultrasonic wave, the two transducers start collecting data simultaneously. TOF in different modes in each transducer is shown in Table 2.

| Sample specification | Material | Manufacturer | Ultrasonic dual-wave period (ns) | Nominal length (mm) | Pulse-echo dual-wave transducer | | | Pitch-catch dual-wave transducers | | | | |
|---|---|---|---|---|---|---|---|---|---|---|---|---|
| | | | | | TOF for a transverse wave $T_{SS}$ (ns) | TOF for a longitudinal wave $T_{LL}$ (ns) | Ratio of TOF for a transverse wave to TOF for a longitudinal wave | TOF for a transverse wave $T_S$ (ns) | TOF for a longitudinal wave $T_L$ (ns) | Ratio of TOF for a transverse wave to TOF for a longitudinal wave | $T_S*2-T_{SS}$ (ns) | $T_L*2-T_{LL}$ (ns) |
| M3 6 | 42CrNiMo | Shandong Gaoqiang | 232.6 | 300 | 186435 | 101690 | 1.83337 | 93224 | 50828 | 1.83411 | 13 | -34 |
| | | | | 400 | 248585 | 135581 | 1.83348 | 124299 | 67568 | *1.83961* | 13 | *-445* |
| | | | | 500 | 310664 | 169443 | 1.83344 | 155342 | 84744 | 1.83307 | 20 | 45 |
| | | | | 600 | 372914 | 203397 | 1.83343 | 186465 | 101713 | 1.83325 | 16 | 29 |

It can be learned from Table 2 that a difference between TOF for an ultrasonic wave obtained by pulse-echo and double of TOF for an ultrasonic wave obtained by pitch-catch in a same mode is far less than TOF of one transmission period of 232.6ns, except 445ns, a deviation of approximately two transmission period, for a longitudinal wave signal with a nominal length of 400mm. Data that may have deviation is highlighted in Table 3 in bold italic font. Therefore, it is determined that at least one set of measured time for the longitudinal wave is unreliable. When a collection gate of TOF for pitch-catch is backward delayed by one peak, the deviation of 445ns is reduced to 20ns. Therefore, it is determined that data obtained TOF gate for pitch-catch is backward delayed by one peak has some measurement reliability.

Embodiment 4

A 10.9-grade 42CrMo high-strength bolt with a diameter of 36mm and a nominal length of 370mm produced by a company is used to calibrate a force on a tensile machine. Table 3 shows TOF measured by simultaneously performing pitch-catch and pulse-echo according to the method in this embodiment. During measurement, a transmission frequency is 4.3MHz, and a period is 232.6ns. Forces exerted by the tensile machine are 0, 200kN, 300kN, 400kN, 500kN, and 600kN respectively.

| Sample specification | Material | Manufacturer | Ultrasonic dual-wave period (ns) | Nominal length (mm) | Tensile force of the tensile machine (kN) | Pulse-echo dual-wave transducer | | | Pitch-catch dual-wave transducers | | | $T_S*2-T_{SS}$ (ns) | $T_L*2-T_{LL}$ (ns) |
|---|---|---|---|---|---|---|---|---|---|---|---|---|---|
| | | | | | | TOF for a transverse wave $T_{SS}$ (ns) | TOF for a longitudinal wave $T_{LL}$ (ns) | Ratio of TOF for a transverse wave to TOF for a longitudinal wave | TOF for a transverse wave $T_S$ (ns) | TOF for a longitudinal wave $T_{LL}$ (ns) | Ratio of TOF for a transverse wave to TOF for a longitudinal wave | | |
| M3 6 | 42 Cr Mo | Shandong Gaoqiang | 232.6 | 370 | 0 | 228437 | 124769 | 1.83088 | 114217 | 62384 | 1.83087 | -3 | -1 |
| | | | | | 200 | 228641 | 125085 | 1.82789 | 114318 | 62543 | 1.82783 | -5 | 1 |
| | | | | | 300 | 228760 | 125261 | 1.82627 | 114376 | 62629 | 1.82625 | -8 | -3 |
| | | | | | 400 | 228877 | 125435 | 1.82467 | 114436 | 62717 | 1.82464 | -5 | -1 |
| | | | | | 500 | 228998 | 125611 | 1.82307 | 114497 | 62806 | 1.82303 | -4 | 1 |
| | | | | | 600 | 229121 | 125790 | 1.82146 | 114561 | 62897 | 1.82141 | 1 | 4 |

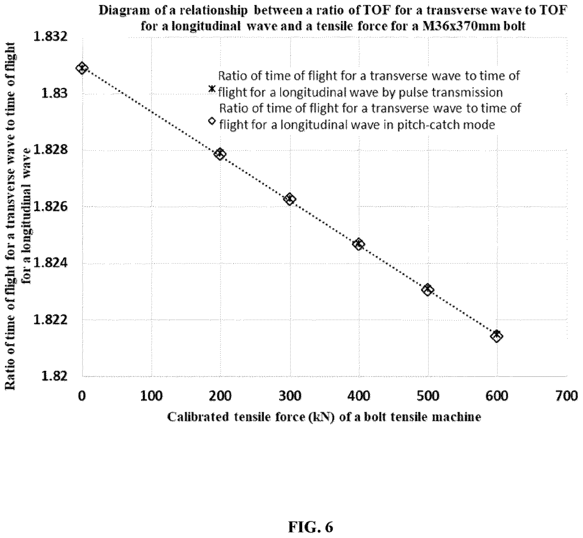

It can be learned from Table 3 that a difference between TOF for an ultrasonic wave obtained by pulse-echo and double of TOF for an ultrasonic wave obtained by pitch-catch in a same mode is far less than TOF of one transmission period of 232.6ns. Therefore, it is determined that this set of calibrated data has some measurement reliability. A linear relationship between a tensile force and a ratio of TOF for the transverse wave to TOF for the longitudinal wave in FIG. 6 is obtained based on calibrated data in Table 3.

Embodiment 5

For a batch of eight M56, 10.9-grade high-strength hexagonal head bolts with a nominal length of 280mm produced by a company and not exerted with a tensile force, TOF is measured by simultaneously performing pitch-catch and pulse-echo mode according to the method in this embodiment. During measurement, a transmission frequency is 4.3MHz, and a period is 232.6ns. An end surface of a hexagonal head of this type of bolt has characters cut in relief, and a probe placed on this side presses against the characters. Measured data is shown in Table 4.

| Sample specification | Material | Manufacturer | Ultrasonic dual-wave period (ns) | Nominal length (mm) | Sample number | Pulse-echo dual-wave transducer | | | Pitch-catch dual-wave transducers | | | $T_S*2-T_{SS}$ (ns) | $T_L*2-T_{LL}$ (ns) |
|---|---|---|---|---|---|---|---|---|---|---|---|---|---|
| | | | | | | TOF for a transverse wave $T_{SS}$ (ns) | TOF for a longitudinal wave $T_{LL}$ (ns) | Ratio of TOF for a transverse wave to TOF for a longitudinal wave | TOF for a transverse wave $T_S$ (ns) | TOF for a longitudinal wave $T_{LL}$ (ns) | Ratio of TOF for a transverse wave to TOF for a longitudinal wave | | |
| M5 6 | 42CrMo | Shandong Gaoqiang | 232.6 | 280 | 1# | 189403 | 103512 | 1.829769 | 94715 | 51771 | 1.829499 | 27 | 30 |
| | | | | | 2# | *189172* | 103514 | *1.827502* | 94713 | 51770 | 1.829496 | *254* | 26 |
| | | | | | 3# | 189429 | 103512 | 1.83002 | 94725 | 51780 | 1.829374 | 21 | 48 |
| | | | | | 4# | 189208 | 103389 | 1.830059 | 94613 | 51710 | 1.829685 | 18 | 31 |
| | | | | | 5# | 189485 | 103552 | 1.829854 | 94769 | 51803 | 1.829411 | 53 | 54 |
| | | | | | 6# | 189193 | 103410 | 1.829543 | 94620 | 51717 | 1.829572 | 47 | 24 |
| | | | | | 7# | 189003 | 103306 | 1.829545 | 94516 | 51667 | 1.82933 | 29 | 28 |
| | | | | | 8# | 189347 | 103478 | 1.829829 | 94689 | 51760 | 1.829386 | 31 | 42 |

A difference between TOF for an ultrasonic wave obtained by pulse-echo of 1#, 3#, 4#, 5#, 6#, 7#, and 8# bolts and double of TOF for an ultrasonic wave obtained by pitch-catch in a same mode is far less than sound time of one transmission period of 232.6ns. Therefore, it is determined that test data of the bolts has some measurement reliability. A difference between TOF for an ultrasonic transverse wave obtained by pulse-echo of 2# bolt and double of TOF for an ultrasonic transverse wave obtained by pitch-catch is 254ns, namely, a deviation of approximately one transmission period. Data that may have deviation is highlighted in Table 4 in bold italic font. Therefore, it is determined that at least one set of measured time for the transverse wave is unreliable.

When a collection gate of TOF for pulse-echo is backward delayed by one peak, the deviation of 254ns is reduced to 21ns. Therefore, it is determined that data obtained after the collection gate of measurement data of TOF for pulse-echo is backward delayed by one peak has some measurement reliability. In this case, a ratio of TOF for the transverse wave to TOF for the longitudinal wave for pulse-echo is approximately a ratio of TOF for a transverse wave to TOF for a longitudinal wave for other seven bolts. It is proved that this method can effectively verify and correct a test result in practical application, especially for measurement of a bolt axial force that does not meet some industry standards and national standards of flatness requirements for both end surfaces of a bolt.

It should be understood that the above specific embodiments of the present invention are only used to illustrate or explain the principle of the present invention, and do not constitute a limitation to the present invention. Therefore, any modification, equivalent substitution, improvement, etc. made without deviating from the spirit and scope of the present invention shall be included in the protection scope of the present invention. In addition, the attached claims in the present invention are intended to cover all variations and modifications falling within the scope and boundaries of the attached claims, or in equivalent forms of the scope and boundaries.

**Claims**

1.  An ultrasonic dual-wave reliability measurement method for a bolt stress, comprising the following steps:

    S01: disposing a first ultrasonic dual-wave transducer at one end of a measured bolt, and disposing a second ultrasonic dual-wave transducer at the other end of the measured bolt, wherein the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;
    S02: propagating the transverse wave or longitudinal wave generated by the first ultrasonic dual-wave transducer in the measured bolt; and measuring time of flight (TOF) for which the first ultrasonic dual-wave transducer and the second ultrasonic dual-wave transducer receive echo signals respectively; and
    S03: verifying measured data, wherein if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements.

2.  The ultrasonic dual-wave reliability measurement method for a bolt stress according to claim 1, wherein after step S03, the method further comprises:
    if the verification requirements are not satisfied, further verifying the measured data, and if the difference between the TOF for which the first ultrasonic dual-wave transducer receives the echo signal and double of the TOF for which the second ultrasonic dual-wave transducer receives the echo signal in a same mode is an integer of transmission periods T±1/4T, adjusting a peak selection gate and/or zero point of an ultrasonic waveform.

3.  The ultrasonic dual-wave reliability measurement method for a bolt stress according to claim 2, wherein if the difference between the TOF for which the first ultrasonic dual-wave transducer receives the echo signal and double of the TOF for which the second ultrasonic dual-wave transducer receives the echo signal in a same mode is an odd number of transmission periods T+1/4T, adjusting a peak selection gate of an echo wave of the first ultrasonic dual-wave transducer; or if the difference is an even number of transmission periods T+1/4T, first adjusting a peak selection gate of an echo wave of the second ultrasonic dual-wave transducer until the difference is not greater than a quarter of one transmission period T.

4.  The ultrasonic dual-wave reliability measurement method for a bolt stress according to any one of claims 1 to 3, wherein after step S03, the method further comprises: if the verification requirements are not satisfied, measuring the TOF of ultrasonic waves in a plurality of propagation sound paths along a length direction of the measured bolt, and performing calibration based on a relationship between the TOF for which the first ultrasonic dual-wave transducer receives an echo signal and the TOF for which the second ultrasonic dual-wave transducer receives an echo signal in a same mode.

5. An ultrasonic dual-wave high-reliability measurement method for a bolt stress, wherein the method for reliability measuring of bolt stress by ultrasonic dual-wave according to any one of claims 1 to 3 is used to verify measured data; and data that satisfies verification requirements is used to calculate the bolt stress.

6. An ultrasonic dual-wave reliability measurement apparatus for a bolt stress, comprising:

a measurement module, comprising a first ultrasonic dual-wave transducer and a second ultrasonic dual-wave transducer arranged at both ends of a measured bolt, wherein the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting and receiving;
a measurement module, configured to propagate the transverse wave or longitudinal wave generated by the first ultrasonic dual-wave transducer in the measured bolt; and measure TOF for which the first ultrasonic dual-wave transducer and the second ultrasonic dual-wave transducer receive echo signals respectively; and
a verification module, configured to verify measured data, wherein if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements.

7. The ultrasonic dual-wave reliability measurement apparatus for a bolt stress according to claim 6, wherein the verification module is further configured to:
if the verification requirements are not satisfied, further verify the measured data, and if the difference between the TOF for which the first ultrasonic dual-wave transducer receives the echo signal and double of the TOF for which the second ultrasonic dual-wave transducer receives the echo signal in a same mode is an integer of transmission periods $T \pm 1/4T$, adjust a peak selection gate and/or zero point of an ultrasonic waveform.

8. The ultrasonic dual-wave reliability measurement apparatus for a bolt stress according to claim 7, wherein if the difference between the TOF for which the first ultrasonic dual-wave transducer receives the echo signal and double of the TOF for which the second ultrasonic dual-wave transducer receives the echo signal in a same mode is an odd number of transmission periods $T+1/4T$, adjusting a peak selection gate of an echo wave of the first ultrasonic dual-wave transducer; or if the difference is an even number of transmission periods $T \pm 1/4T$, first adjusting a peak selection gate of an echo wave of the second ultrasonic dual-wave transducer until the difference is not greater than a quarter of one transmission period T.

9. The ultrasonic dual-wave reliability measurement apparatus for a bolt stress according to any one of claims 6 to 8, wherein the verification module is further configured to: if the verification requirements are not satisfied, measure the TOF of ultrasonic waves in a plurality of propagation sound paths along a length direction of the measured bolt, and perform calibration based on a relationship between the TOF for which the first ultrasonic dual-wave transducer receives an echo signal and the TOF for which the second ultrasonic dual-wave transducer receives an echo signal in a same mode.

Dispose a first ultrasonic dual-wave transducer at one end of a measured bolt, and dispose a second ultrasonic dual-wave transducer at the other end of the measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting or receiving

S01

Propagate the transverse wave or longitudinal wave generated by the first ultrasonic dual-wave transducer in the detected bolt; and measure TOF for which the first ultrasonic dual-wave transducer and the second ultrasonic dual-wave transducer receive echo signals respectively

S02

Verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements

S03

**FIG. 1**

**FIG. 2**

Dispose a first ultrasonic dual-wave transducer at one end of a measured bolt, and dispose a second ultrasonic dual-wave transducer at the other end of the measured bolt, where the first ultrasonic dual-wave transducer is configured to transmit and receive an ultrasonic transverse wave or an ultrasonic longitudinal wave, the second ultrasonic dual-wave transducer is configured to receive the ultrasonic transverse wave or the ultrasonic longitudinal wave, and the first ultrasonic dual-wave transducer and the second ultrasonic dual-wave transducer have a function of triggering synchronous communication of transmitting or receiving

S01

Propagate the transverse wave or longitudinal wave generated by the first ultrasonic dual-wave transducer in the detected bolt; and measure TOF for which the first ultrasonic dual-wave transducer and the second ultrasonic dual-wave transducer receive echo signals respectively

S02

Verify measured data, where if a difference between the TOF for which the first ultrasonic dual-wave transducer receives the echo signal and double of the TOF for which the second ultrasonic dual-wave transducer receives the echo signal in a same mode is not greater than a quarter of one transmission period T, the measured TOF satisfies verification requirements, or if the difference is greater than a quarter of one transmission period T, the measured TOF does not satisfy verification requirements

S03

Use data that satisfies verification requirements to calculate a bolt stress or axial force

S04

**FIG. 3**

Detection module 100

Measurement module 101

Verification module 102

**FIG. 4**

**FIG. 5**

**Diagram of a relationship between a ratio of TOF for a transverse wave to TOF for a longitudinal wave and a tensile force for a M36x370mm bolt**

FIG. 6

## INTERNATIONAL SEARCH REPORT

| International application No. |
|---|
| **PCT/CN2022/131604** |

**A. CLASSIFICATION OF SUBJECT MATTER**

G01L 5/24(2006.01)i

According to International Patent Classification (IPC) or to both national classification and IPC

**B. FIELDS SEARCHED**

Minimum documentation searched (classification system followed by classification symbols)

G01L

Documentation searched other than minimum documentation to the extent that such documents are included in the fields searched

Electronic data base consulted during the international search (name of data base and, where practicable, search terms used)

CNTXT, ENTXT, ENTXTC, VEN: 超声波, 声波, 飞行时间, 声时, 走时, 时差, 时间, 两, 二, 校准, 校验, 校正, 零点, 零交点, 选峰, 峰值, 阈值, ultrasonic, sound wave, acoustic, time of flight, TOF, time, two, second, calibrat+, verify, zero crossing, peak, threshold

**C. DOCUMENTS CONSIDERED TO BE RELEVANT**

| Category* | Citation of document, with indication, where appropriate, of the relevant passages | Relevant to claim No. |
|---|---|---|
| PX | CN 114184313 A (SUZHOU PHASERISE TECHNOLOGY CO., LTD.) 15 March 2022 (2022-03-15)<br>claims 1-9 | 1-9 |
| X | CN 105403265 A (NINGBO WATER METER CO., LTD.) 16 March 2016 (2016-03-16)<br>description, paragraphs 2-23, and figure 2 | 1, 4-6, 9 |
| Y | CN 105403265 A (NINGBO WATER METER CO., LTD.) 16 March 2016 (2016-03-16)<br>description, paragraphs 2-23, and figure 2 | 2-3, 7-8 |
| Y | CN 1864047 A (DANIEL INDUSTRIES, INC.) 15 November 2006 (2006-11-15)<br>description, pages 11-12 | 2-3, 7-8 |
| A | CN 104406642 A (TIANJIN UNIVERSITY OF COMMERCE) 11 March 2015 (2015-03-11)<br>entire document | 1-9 |
| A | US 4182155 A (PANAMETRICS) 08 January 1980 (1980-01-08)<br>entire document | 1-9 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 January 2023** | **20 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/131604**

| Patent document cited in search report | | | Publication date (day/month/year) | Patent family member(s) | | | Publication date (day/month/year) |
|---|---|---|---|---|---|---|---|
| CN | 114184313 | A | 15 March 2022 | None | | | |
| CN | 105403265 | A | 16 March 2016 | None | | | |
| CN | 1864047 | A | 15 November 2006 | BR | PI0414205 | A | 31 October 2006 |
| | | | | US | 2005055171 | A1 | 10 March 2005 |
| | | | | GB | 0604665 | D0 | 19 April 2006 |
| | | | | HK | 1089230 | A1 | 24 November 2006 |
| | | | | WO | 2005026668 | A1 | 24 March 2005 |
| | | | | CA | 2538155 | A1 | 24 March 2005 |
| | | | | US | 6950768 | B2 | 27 September 2005 |
| | | | | GB | 2421793 | A | 05 July 2006 |
| | | | | GB | 2421793 | B | 21 March 2007 |
| | | | | CN | 100561137 | C | 18 November 2009 |
| | | | | CA | 2538155 | C | 19 April 2011 |
| | | | | BR | PI0414205 | B1 | 16 June 2015 |
| CN | 104406642 | A | 11 March 2015 | CN | 104406642 | B | 03 October 2017 |
| US | 4182155 | A | 08 January 1980 | IT | 7968857 | D0 | 24 September 1979 |
| | | | | FR | 2436968 | A1 | 18 April 1980 |
| | | | | CA | 1126384 | A | 22 June 1982 |
| | | | | DE | 2953170 | A1 | 18 December 1980 |
| | | | | GB | 2043252 | A | 01 October 1980 |
| | | | | JP | S55500730 | A | 02 October 1980 |
| | | | | GB | 2043252 | B | 01 December 1982 |
| | | | | IT | 1165232 | B | 22 April 1987 |
| | | | | WO | 1980000749 | A1 | 17 April 1980 |
| | | | | FR | 2436968 | B1 | 30 December 1983 |

Form PCT/ISA/210 (patent family annex) (January 2015)